# EUROPEAN PATENT APPLICATION

(11) **EP 1 327 790 A2**
(43) Date of publication of application: **16.07.2003**
(21) Application number: 03000334.7
(22) Date of filing: 09.01.2003
(51) Int. Cl.: F16D 9/08

(54) **Torque limiter**

(30) Priority: 10.01.2002 JP 2002003738
(71) Applicant: Kabushiki Kaisha Toyota Jidoshokki, Kariya-shi, Aichi-ken (JP)
(72) Inventor: Kanai, Akinobu, Kariya-shi, Aichi-ken (JP); Kawaguchi, Masahiro, Kariya-shi, Aichi-ken (JP); Ota, Masaki, Kariya-shi, Aichi-ken (JP); Adaniya, Taku, Kariya-shi, Aichi-ken (JP); Kawata, Takeshi, Kariya-shi, Aichi-ken (JP); Suzuki, Takahiro, Kariya-shi, Aichi-ken (JP)
(74) Representative: Leson, Thomas Johannes Alois, Dipl.-Ing.

(57) **Abstract**

A torque limiter (15) is placed between a first rotary body (12) and a second rotary body (35) in a power transmission path. The torque limiter has a breaking portion (34), a flange (31) connected to the first rotary body and a connecting portion (32) protruding from the flange. The connecting portion is screwed to the second rotary body at a predetermined value of fastening torque. The torque is transmitted between the first rotary body and the second rotary body in a relative rotational direction of fastening the connecting portion to the second rotary body. A portion of the flange belongs to the first rotary body after the breaking portion of the flange is broken. The portion of the flange forms a regulating surface (31A) for fastening the connecting portion to the second rotary body. The fastening torque is regulated by a contact on the regulating surface between the flange and the second rotary body.

## Description

### BACKGROUND OF THE INVENTION

The present invention relates to a torque limiter that is placed in a power transmission path, for example, between an engine as a vehicle driving source and a refrigeration compressor for a vehicle air conditioning apparatus, which enables not only to transmit torque but also to block excessive transmission torque.

Japanese Unexamined Patent Publication 2001-59560 discloses this type of torque limiter. As shown in FIGs. 4A and 4B, a torque limiter 101 for use in a compressor includes a flange 102 and a connecting portion 103 that protrudes from the center of the flange 102. The flange 102 is connected to a rotor 111 at an engine side. The connecting portion 103 is screwed to a drive shaft 112 of the compressor at a predetermined value of fastening torque. Torque is transmitted from the rotor 111 to the drive shaft 112 in the direction of fastening the connecting portion 103.

If load torque applied to the compressor, which is required to drive the compressor, reaches or exceeds value of limit torque that is set to be larger than the predetermined value of fastening torque of the connecting portion 103 due to a problem such as deadlocking, at least one of a screw thread of an internal thread 103a of the connecting portion 103 and a screw thread of an external thread 112a of the drive shaft 112 is broken because of excessive contact between the screw threads. At this time, coupling between the internal thread 103a of the connecting portion 103 and the external thread 112a of the drive shaft 112 by screwing is loosened. Therefore, the connecting portion 103 is idled relative to the drive shaft 112 in spite of rotation of the rotor 111, thereby preventing excessive load torque of the compressor from transmitting to the engine side.

When the transmission torque of the torque limiter 101 becomes excessive, however, the screw threads are broken relatively in a small space between the connecting portion 103 and the drive shaft 112. Therefore, even after the screw threads are broken, slide resistance between the connecting portion 103 and the drive shaft 112 remains due to a residual fragment of the broken screw thread. When the slide resistance remains between the connecting portion 103 and the drive shaft 112, abnormal sound and noise are generated and smooth and stable operation of the engine is impeded. Furthermore, the torque transmission is restored due to weld sticking of the sliding portions, thereby the engine is stalled.

### SUMMARY OF THE INVENTION

The present invention is directed to a torque limiter that restrains slide resistance between a first broken surface of a first rotary body and a second broken surface of a second rotary body after a breaking portion between the first rotary body and the second rotary body is broken.

The present invention has a following feature. A torque limiter is placed between a first rotary body and a second rotary body in a power transmission path. The torque limiter has a breaking portion. The torque limiter enables to transmit torque between the first rotary body and the second rotary body while blocking excessive torque transmission between the first rotary body and the second rotary body by breaking the breaking portion of the torque limiter. The torque limiter has a flange and a connecting portion. The flange is connected to the first rotary body. The connecting portion protrudes from the flange. The connecting portion is screwed to the second rotary body at a predetermined value of fastening torque. The torque is transmitted between the first rotary body and the second rotary body in a relative rotational direction of fastening the connecting portion to the second rotary body. A portion of the flange belongs to the first rotary body after the breaking portion of the flange is broken. The portion of the flange forms a regulating surface for fastening the connecting portion to the second rotary body. The fastening torque is regulated by a contact on the regulating surface between the flange and the second rotary body.

Furthermore, the present invention has following another feature. A power transmission device has a first rotary body, a second rotary body and a torque limiter. The second rotary body is connected to the first rotary body. The torque limiter is placed between the first rotary body and the second rotary body. The torque limiter has a breaking portion. The torque limiter enables to transmit torque between the first rotary body and the second rotary body while blocking excessive torque transmission between the first rotary body and the second rotary body by breaking the breaking portion of the torque limiter. The torque limiter has a flange and a connecting portion. The flange is connected to the first rotary body. The connecting portion protrudes from the flange. The connecting portion is screwed to the second rotary body at a predetermined value of fastening torque. The torque is transmitted between the first rotary body and the second rotary body in a relative rotational direction of fastening the connecting portion to the second rotary body. A portion of the flange belongs to the first rotary body after the breaking portion of the flange is broken. The portion of the flange forms a regulating surface for fastening the connecting portion to the second rotary body. The fastening torque is regulated by a contact on the regulating surface between the flange and the second rotary body.

### BRIEF DESCRIPTION OF THE DRAWINGS

The features of the present invention that are believed to be novel are set forth with particularity in the appended claims. The invention, together with objects and advantages thereof, may best be understood by reference to the following description of the presently preferred embodiments together with the accompanying drawings in which:
FIG. 1A is a partial cross-sectional view illustrating a compressor provided with a torque limiter according to a preferred embodiment of the present invention;
FIG. 1B is a partially enlarged view illustrating a breaking portion of the torque limiter shown in FIG. 1A;
FIG. 2 is an end view illustrating the torque limiter, an adapter and a drive shaft shown in FIG. 1A;
FIG. 3A is a partial cross-sectional view illustrating a compressor provided with a torque limiter according to another embodiment of the present invention;
FIG. 3B is a partially enlarged view illustrating a breaking portion of the torque limiter shown in FIG. 3A;

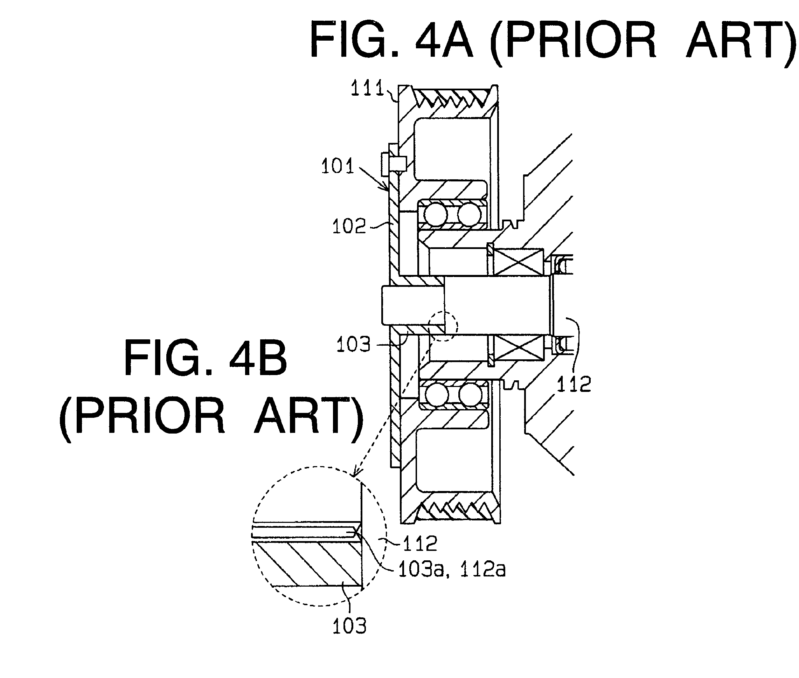

FIG. 4A is a partial cross-sectional view illustrating a compressor provided with a torque limiter according to the prior art; and
FIG. 4B is a partially enlarged view illustrating a breaking portion of the torque limiter shown in FIG. 4A.

### DETAILED DESCRIPTION OF THE PREFERRED EMBODIMENTS

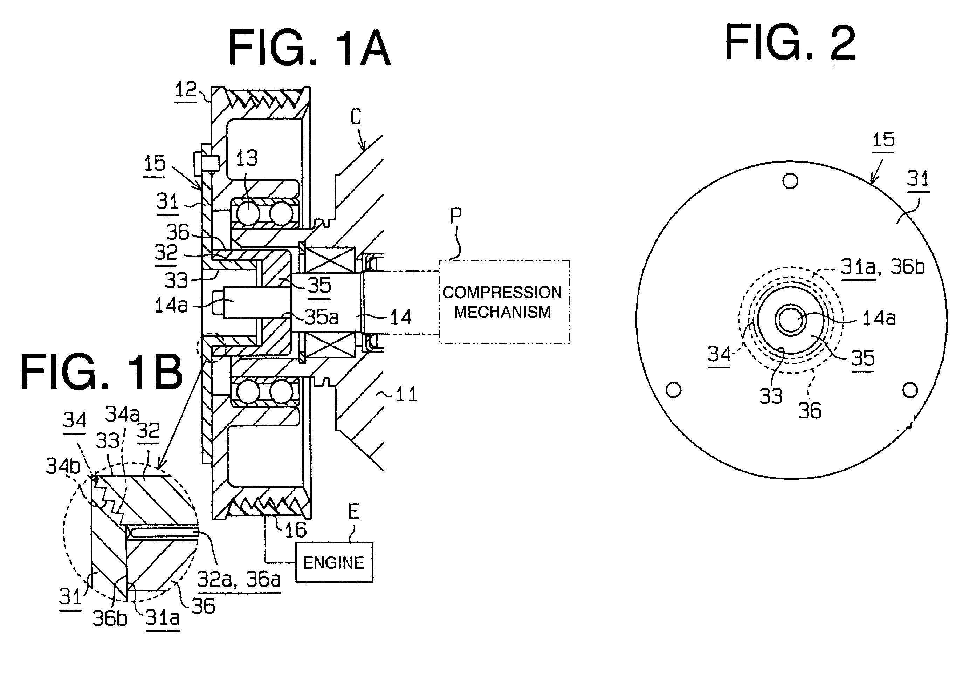

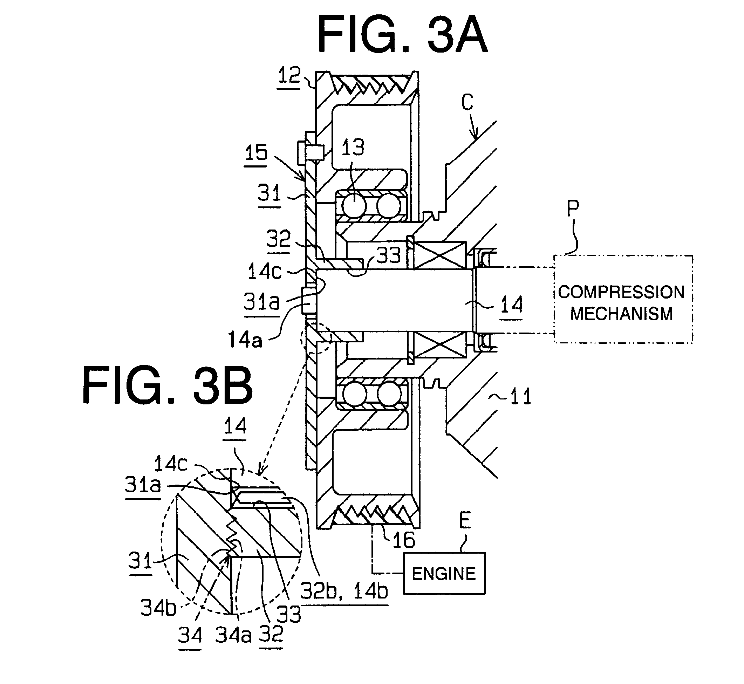

A torque limiter according to a preferred embodiment of the present invention will now be described with reference to FIGs. 1A through 3B. Note that left side of FIGs. 1 A and 3A is front side and right side of FIGs. 1A and 3A is rear side. In the present embodiment, the torque limiter is adopted in a power transmission path between an engine as a vehicle driving source and a refrigeration compressor C for a vehicle air conditioning apparatus.

To begin with, the power transmission path will be described with reference to FIG. 1A. The compressor C that constitutes a refrigerating cycle has a housing 11 and a compression mechanism P in the housing 11. A rotor 12 as a first rotary body is supported for rotation on the outer wall surface through a bearing 13. The rotor 12 is operatively connected to a drive shaft 14 of the compression mechanism P through a torque limiter 15. A belt 16 that connects to an output shaft of an engine E is partially wound on the outer circumference of the rotor 12.

As constituted above, power or torque of the engine E is transmitted to the drive shaft 14 through the belt 16, the rotor 12 and the torque limiter 15. Thus, the compression mechanism P compresses a refrigerant gas. Herein, the compression mechanism P is one of a piston type, a scroll type and a vane type. Also, a displacement of the compressor C is either a fixed displacement type or a variable displacement type.

The torque limiter 15 is constituted to be capable of blocking excessive torque transmission from the engine E to the compression mechanism P. The torque limiter 15 is a breaking type. That is, a part of the power transmission path is broken by the excessive torque transmission.

Now, the structure of the torque limiter 15 will be described with reference to FIGs. 1 A through 2. The torque limiter 15 includes a disc-shaped flange 31 and a cylindrical connecting portion 32. The connecting portion 32 protrudes substantially from the center of the rear surface of the flange 31. A through hole 33 is formed substantially at the centers of the flange 31 and the connecting portion 32 to penetrate the flange 31 and the connecting portion 32. The torque limiter 15 is, for example, made of material such as iron series and aluminum series or made of synthetic resin. An external thread 32a is formed on the outer circumferential surface of the connecting portion 32. As shown in FIG. 1B, a breaking portion 34 is set in an annular region around an axis of the drive shaft 14 near a joint that joins the flange 31 to the connecting portion 32. Also, a regulating surface 31a is set in the annular region that is positioned on outer side of the connecting portion 32 on the rear surface of the flange 31.

The drive shaft 14 has a front distal end 14a whose diameter is relatively small. An adapter 35 as a second rotary body has a through hole 35a therein and the through hole 35a is press-fitted around the distal end 14a. Thereby, the adapter 35 is integrally rotated with the drive shaft 14. A cylindrical limiter installing portion 36 protrudes from the adapter 35 toward the front side. An internal thread 36a is formed on the inner circumferential surface of the limiter installing portion 36. A contacting surface 36b is set on the front end surface of the limiter installing portion 36.

The torque limiter 15 is coupled to the limiter installing portion 36 such that the external thread 32a of the connecting portion 32 is screwed in the internal thread 36a of the limiter installing portion 36. The connecting portion 32 is screwed in the limiter installing portion 36 until the regulating surface 31a of the flange 31 contacts the contacting portion 36b of the limiter installing portion 36. Thereby, the torque limiter 15 is fastened to the adapter 35 at a predetermined value of fastening torque. Therefore, the power of the engine E is transmitted to the flange 31 of the torque limiter 15 through the rotor 12 and is transmitted to the adapter 35 through the connecting portion 32. Thereby, the drive shaft 14 is rotated. Herein, the predetermined value of fastening torque of the connecting portion 32 is set to be larger than the maximum value of load torque of the compression mechanism P in a normal state.

Now, the operation of the torque limiter 15 is described in detail. If the value of torque transmitted between the rotor 12 and the drive shaft 14 becomes equal to or more than the value of limit torque, which is set to be larger than the predetermined value of fastening torque of the connecting portion 32, due to a problem such as deadlocking in the compression mechanism P, the connecting portion 32 of the torque limiter 15 tends to be screwed to the adapter 35 to be fastened. That is, the connecting portion 32 tends to be moved rightward in FIG. 1A. Meanwhile, a portion of the flange 31, which is belonging to the side of the rotor 12 after the breaking portion 34 is broken, is regulated from moving with connecting portion 32, by the contact between the regulating surface 31a of the flange 31 and the contacting surface 36b of the adapter 35.

Therefore, the breaking portion 34, which is set near a joint that joins the flange 31 to the connecting portion 32, is broken so as to be torn due to the concentration of reactive force generated based on the screwing of the connecting portion 32. The torque limiter 15 whose the breaking portion 34 has been broken is divided in two, or the rotor 12 side and the adapter 35 side relative to the breaking portion 34. Thus, since the rotor 12 becomes rotatable relative to the adapter 35 or the drive shaft 14, the excessive torque transmission from the engine E to the compression mechanism P is blocked. Thereby, the excessive driving load of the compression mechanism P caused by the engine E, in other words, a stall of the engine E is prevented.

Furthermore, not only the reactive force or tensile force generated based on the fastening torque of the connecting portion 32 is applied to the breaking portion 34, but also shearing force generated based on the transmission torque is applied to the breaking portion 34. However, the shearing force generated based on the transmission torque is applied to the torque limiter 15 as a whole without particularly concentrating the breaking portion 34. That is, as described above, the breaking portion 34 of the torque limiter 15 is broken mainly by increase of the tensile force generated based on increase of the fastening torque of the connecting portion 32 and is broken secondarily by increase of the shearing force generated based on increase of the transmission torque.

In the preferred embodiment of the present invention, the following effects are obtained.

The breaking portion 34 is torn and broken by screwing the connecting portion 32. Thereby, the excessive torque transmission is blocked. Therefore, after the breaking portion 34 is broken, a first broken surface 34a of the breaking portion 34 at the rotor 12 side is separated from a second broken surface 34b of the breaking portion 34 at the adapter 35 side. Accordingly, even when the rotor 12 rotates relative to the adapter 35, the slide resistance between the first broken surface 34a and the second broken surface 34b is restrained. Thereby, abnormal sound and vibration caused due to the slide resistance between the first broken surface 34a and the second broken surface 34b are prevented. Also, impediment of stable operation of the engine E is prevented. Furthermore, the stall of the engine E, which is caused by the restoration of the torque transmission, by the weld sticking between the first broken surface 34a and the second broken surface 34b, is prevented.

While torque is transmitted in a normal state, a predetermined fastening torque of the connecting portion 32 is fixedly applied to the breaking portion 34 of the torque limiter 15. Therefore, although the load torque applied to the compression mechanism P is varied all the time, reactive force repeatedly applied to the breaking portion 34 in accordance with variation of the torque is almost ignored. Thereby, even if the limit torque is set at a relatively small value, relatively high safety factor is ensured. Thus, function of the torque limiter 15 is compatible with durability of the torque limiter 15 at relatively high level.

The breaking portion 34 of the torque limiter 15 is set near the joint that joins the flange 31 to the connecting portion 32. Since the reactive force generated based on the fastening torque of the connecting portion 32 tends to concentrate around the joint, the breaking portion 34 is securely broken when value of the reactive force becomes equal to or more than that of the limit torque.
Thus, reliability of the torque limiter 15 is improved.

The breaking portion 34 of the torque limiter 15 is set in the annular region. Therefore, as compared to the case that, for example, the flange 31 and the connecting portion 32 are separated while partially connected to each other by a plurality of bridges and that the breaking portion 34 is set in the bridges, the shape of the torque limiter 15 becomes simple. Thereby, the torque limiter 15 is easily manufactured. Herein, the above case does not deviate from the scope of the present invention.

The torque limiter 15 is constituted such that the disc-shaped flange 31 and the cylindrical connecting portion 32 are integrally formed. The torque limiter 15 is simple in shape and is easily manufactured.

As described above, the reactive force repeatedly applied to the breaking portion 34 of the torque limiter 15 in accordance with the load torque applied to the compression mechanism P, which is varied all the time, is almost ignored. That is, the torque limiter 15 is particularly suitably adopted in the power transmission path between the vehicle engine E and the compressor C for the vehicle air conditioning apparatus.

In the present invention, the following alternative implementations are also practiced. In the above described embodiment, the connecting portion 32 of the torque limiter 15 is coupled to the adapter 35 side such that the external thread 32a formed on the outer circumferential surface of the connecting portion 32 is screwed in the internal thread 36a formed on the inner circumferential surface of the adapter 35. In alternative embodiments to the preferred embodiment, as shown in FIGs. 3A and 3B, an internal thread 32b is formed on the inner circumferential surface of the connecting portion 32 of the torque limiter 15 while an external thread 14b is formed on the outer circumferential surface of the drive shaft 14 as a second rotary body. Thereby, the torque limiter 15 is directly screwed to the drive shaft 14. In this case, the adapter 35 is eliminated. Thereby, the structure of the torque limiter is simplified.

In the present embodiment, the inner circumferential periphery of the flange 31 extends in the through hole 33 and the rear end surface of the inner circumferential periphery is a regulating surface 31a. The front end surface of the drive shaft 14 is a contacting surface 14c that contacts the regulating surface 31a of the torque limiter 15.

In alternative embodiments to the preferred embodiment, the adapter 35 of the above preferred embodiment is eliminated. In this case, the front end of the drive shaft 14 is formed in the shape of cylinder similar to the shape of the limiter installing portion 36. The torque limiter 15 is directly screwed to the drive shaft 14 by forming the internal thread on the inner circumferential surface of the cylinder.

The torque limiter according to the present invention is not only adopted in the power transmission path between the engine E and the compressor C for the vehicle air conditioning apparatus. In alternative embodiments to the preferred embodiment, the torque limiter is adopted between the engine E and a hydraulic pump for a vehicle brake assist device, between the engine E and a hydraulic pump for a power steering device, and between the engine E and an air pump for an air suspension device and so forth.

In the present embodiment, the torque limiter is placed only between the two rotary bodies. In alternative embodiments to the preferred embodiment, however, a torque limiter is placed between more than two rotary bodies.

Therefore, the present examples and embodiments are to be considered as illustrative and not restrictive and the invention is not to be limited to the details given herein but may be modified within the scope of the appended claims.

A torque limiter is placed between a first rotary body and a second rotary body in a power transmission path. The torque limiter has a breaking portion, a flange connected to the first rotary body and a connecting portion protruding from the flange. The connecting portion is screwed to the second rotary body at a predetermined value of fastening torque. The torque is transmitted between the first rotary body and the second rotary body in a relative rotational direction of fastening the connecting portion to the second rotary body. A portion of the flange belongs to the first rotary body after the breaking portion of the flange is broken. The portion of the flange forms a regulating surface for fastening the connecting portion to the second rotary body. The fastening torque is regulated by a contact on the regulating surface between the flange and the second rotary body.

## Claims

1. A torque limiter placed between a first rotary body and a second rotary body in a power transmission path, the torque limiter having a breaking portion, the torque limiter enabling to transmit torque between the first rotary body and the second rotary body while blocking excessive torque transmission between the first rotary body and the second rotary body by breaking the breaking portion, the torque limiter comprising:
a flange connected to the first rotary body; and
a connecting portion protruding from the flange, the connecting portion being screwed to the second rotary body at a predetermined value of fastening torque, the torque being transmitted between the first rotary body and the second rotary body in a relative rotational direction of fastening the connecting portion to the second rotary body, a portion of the flange belonging to the first rotary body after the breaking portion is broken, the portion of the flange forming a regulating surface for fastening the connecting portion to the second rotary body, the fastening torque being regulated by a contact on the regulating surface between the flange and the second rotary body.

2. The torque limiter according to claim 1 wherein the breaking portion is set near a joint that joins the flange to the connecting portion.

3. The torque limiter according to claim 1 wherein the breaking portion is set in an annular region.

4. The torque limiter according to claim 1 wherein the flange is disc-shaped, the connecting portion being cylindrical shape and integrally formed substantially at a center of the flange.

5. The torque limiter according to claim 1 wherein the power transmission path is a power transmission path between a vehicle driving source and a refrigeration compressor for a vehicle air conditioning apparatus.

6. The torque limiter according to claim 1 wherein the connecting portion has an external thread and the second rotary body has an internal thread, the external thread being screwed in the internal thread.

7. The torque limiter according to claim 1 wherein the connecting portion has an internal thread and the second rotary body has an external thread, the external thread being screwed in the internal thread.

8. The torque limiter according to claim 1 wherein the second rotary body has a contacting surface for contacting the regulating surface.

9. The torque limiter according to claim 1 wherein the first rotary body is a rotor and the second rotary body is an adapter.

10. The torque limiter according to claim 1 wherein the first rotary body is a rotor and the second rotary body is a drive shaft.

11. The torque limiter according to claim 1 wherein the torque limiter is made of material including iron series, aluminum series, and synthetic resin.

12. A power transmission device comprising:
a first rotary body;
a second rotary body connected to the first rotary body; and
a torque limiter placed between the first rotary body and the second rotary body, the torque limiter having a breaking portion, the torque limiter enabling to transmit torque between the first rotary body and the second rotary body while blocking excessive torque transmission between the first rotary body and the second rotary body by breaking the breaking portion, the torque limiter comprising:
a flange connected to the first rotary body; and
a connecting portion protruding from the flange, the connecting portion being screwed to the second rotary body at a predetermined value of fastening torque, the torque being transmitted between the first rotary body and the second rotary body in a relative rotational direction of fastening the connecting portion to the second rotary body, a portion of the flange belonging to the first rotary body after the breaking portion is broken, the portion of the flange forming a regulating surface for fastening the connecting portion to the second rotary body, the fastening torque being regulated by a contact on the regulating surface between the flange and the second rotary body.

13. The power transmission device according to claim 12 wherein the breaking portion is set near a joint that joins the flange to the connecting portion.

14. The power transmission device according to claim 12 wherein the breaking portion is set in an annular region.

15. The power transmission device according to claim 12 wherein the flange is disc-shaped, the connecting portion being cylindrical shape and integrally formed substantially at a center of the flange.

16. A torque limiter placed between a plurality of rotary bodies in a power transmission path, the torque limiter having a breaking portion, the torque limiter enabling to transmit torque between two or more rotary bodies while blocking excessive torque transmission between two or more rotary bodies by breaking the breaking portion, the torque limiter comprising:
a flange connected to one rotary body; and
a connecting portion protruding from the flange, the connecting portion being screwed to one or more rotary bodies at a predetermined value of fastening torque, the torque being transmitted between the one rotary body and the one or more rotary bodies in a relative rotational direction of fastening the connecting portion to the one or more rotary bodies, a portion of the flange belonging to the one rotary body after the breaking portion is broken, the portion of the flange forming a regulating surface for fastening the connecting portion to one of the rotary bodies, the fastening torque being regulated by a contact on the regulating surface between the flange and the one or more rotary bodies.
